# EUROPEAN PATENT APPLICATION

(11) **EP 4 517 712 A1**
(43) Date of publication of application: **05.03.2025**
(21) Application number: 23204808.2
(22) Date of filing: 20.10.2023
(51) Int. Cl.: G08G 1/0962, B60W 30/14, G06V 20/58, G06V 20/56

(54) **METHOD FOR ASSIGNING SPEED LIMIT SIGNS TO HIGHWAY EXITS AND ENTRIES**

(30) Priority: 30.08.2023 EP 23194337
(71) Applicant: Continental Autonomous Mobility Germany GmbH, 85057 Ingolstadt (DE)
(72) Inventor: Martin, Florian, 90411 Nürnberg (DE); Balakrishna, Akshatha, 90411 Nürnberg (DE); Luis, Steffen, 90411 Nürnberg (DE); Anandhakrishnan, Priyanka, 90411 Nürnberg (DE); Groh, Marcus, 90411 Nürnberg (DE); Roskin, Olga, 90411 Nürnberg (DE); Askari, Hasan, 90411 Nürnberg (DE)
(74) Representative: Continental Corporation

(57) **Abstract**

The invention relates to a method for assigning speed limit signs to highway exits and entries using at least one camera sensor of an ego-vehicle with the following steps:
- Detecting (S1) lanes of a road in front of the ego-vehicle by means of the at least one camera sensor;
- Generating (S2) and updating a road model based on the detected lanes and tracking the road model;
- Identifying (S3) if the ego-vehicle is driving on a highway based on the road model;
- Identifying (S4) a possible highway exit or entry candidate comprising detecting and tracking at least one additional lane which is added on one side of the road to the road model;
- Detecting (S5) a speed limit sign next to the possible highway exit or entry;
- Assigning (S6) the traffic sign only to the exit or entry, if predefined criteria are met.

## Description

The invention relates to a method for assigning speed limit signs to highway exits and entries as well as a computer program product for assigning speed limit signs to highway exits and entries which is designed to execute the method.

It is known from the state of the art to detect traffic signs and in particular speed limits by means of at least one camera sensor which are potentially relevant for an ego-vehicle. This information is then used to either inform a driver about a potential speed limit or, in case of automated driving, to adapt the speed of the ego-vehicle to match the speed limit of the road.

However, it can be difficult to assign the speed limit to a specific lane if there are multiple lanes and a speed limit might only apply to a specific lane. This applies especially to speed limits which are only valid for exits or entries to a highway, especially in cases, where no digital map data is available.

It is therefore an object of the present invention to provide a method by means of which an efficient and reliable assignment of a speed limit sign to a highway exit or entry is possible.

This object is advantageously solved by the subject matter of independent claims 1 and 9. Further preferred embodiments are subject matter of the dependent claims.

The handling of speed limits near exits or entries is one of the major problems in highway scenarios for traffic sign assist systems. This is especially true for cases without digital map support and if the camera is unable to detect supplementary signs or any signs explicitly indicating exits or entries at all, since the camera provides no further explicit information on whether there is an exit or entry around or whether a sign is only valid for an exit or entry.

In general, the sign position information along with lane geometry information received by the camera sensor can be used to classify a sign into either the category "is above lane" or "is next to the road". Signs above a specific lane can reliably be assigned to that specific lane. Signs next to the road can in most cases be assigned to all lanes. However, if there is an exit, entry or some other kind of road split nearby, there is a chance that a sign positioned next to the road is not valid for the main highway, but only e.g., the respective set of exit or entry lanes.

According to the invention a method for assigning speed limit signs to highway exits and entries using at least one camera sensor of an ego-vehicle with the following steps is disclosed:
- Detecting lanes of a road in front of the ego-vehicle by means of the at least one camera sensor;
- Generating and updating a road model based on the detected lanes and tracking the road model;
- Identifying if the ego-vehicle is driving on a highway based on the road model;
- Identifying a possible highway exit or entry candidate comprising detecting and tracking at least one additional lane which is added on one side of the road to the road model;
- Detecting a speed limit sign next to the possible highway exit or entry;
- Assigning the traffic sign only to the exit or entry if predefined criteria are met.

The camera sensor can be a single mono camera, a stereo camera or multiple cameras which are part of a surround view camera system.

Detecting the lanes and tracking the road model is done continuously i.e., the road model is constantly updated with the detected lanes. Based on the road model it can be identified on which kind of road the ego-vehicle is currently travelling. Based on the number of detected lanes and possibly but not necessarily the traffic direction on those lanes, it can be derived that the ego-vehicle is travelling on a highway. In countries with right-hand traffic, those additional lanes are considered to be a potential exit or entry if they appear on the right side of the road and in countries with left-hand traffic on the left side of the road. Also, in addition to the road model, traffic signs which are detected by the at least one camera sensor could be considered to determine if the vehicle is travelling on a highway. These traffic signs might be e.g., signs indicating the start or end of a highway or typical traffic signs which only appear on a highway.

As said previously, the lanes are detected continuously while the ego-vehicle is moving, and the road model is tracked during this time. The detected lanes are fused with the road model to check if one or more lanes are added to the right and/or left side of the road during the driving.. If the ego-vehicle detects at least one additional lane on one side of the road which was not present in the road model before, the at least one additional lane is then identified as a possible highway exit or entry.

The longitudinal coordinate of the traffic sign can be defined with relation to a vehicle coordinate system and can be given as an x-coordinate.

The sign being located only on one side means that there is no paired sign on the opposite side of the road. No paired sign means that there is no sign on the opposite side of the road of the exact same type and meaning.

In a preferred embodiment detecting the lanes on the road is done by detecting lane markings with the at least one camera sensor. Detecting lane markings is an efficient and reliable way to define where lanes are and how many lanes there are. The lane marking detection can differentiate between dashed or dotted lines and solid lines.

In a further preferred embodiment, the predefined criteria are as follows:
a) A longitudinal coordinate of the traffic sign is within a range around the starting point of the possible exit or entry;
b) The speed limit sign is next to the road and only on one side; and
c) The speed-limit is lower than the speed limit which has been valid on the highway before passing the speed limit sign.

It is preferred that the starting point of the potential highway exit or entry is defined as an x-coordinate in relation to a vehicle coordinate system. This is advantageous since with the knowledge of the start of the potential highway exit or entry in this coordinate system, this starting point and the location of the speed limit sign, which is given in the same coordinate system, can be compared. With this method it can be defined if the speed limit sign is in the near proximity of the potential highway exit or entry. The starting point of an exit or entry candidate is defined as the starting point of the lane that starts last with respect to the driving direction out of all the lanes that comprise the given exit or entry candidate. The starting point of a lane is given by an x-coordinate in relation to a vehicle coordinate system and marks the position at which the lane starts according to the used road model. In order to decide if multiple new lanes are to be considered as either one single or multiple separate exit/entry candidates, a predefined threshold distance can be used: If the distance between the starting point of the currently last lane of a given exit/entry candidate and the starting point of the new lane to be checked is smaller than the threshold distance, the new lane would be added to the exit/entry candidate and the starting point of this candidate would be updated accordingly. Otherwise, a separate exit/entry candidate is created containing the new lane.

In a further preferred embodiment after the ego-vehicle has passed a predefined distance after the starting point, the at least one additional lane is considered to be a permanent part of the road if the at least one additional lane is still present after the predefined distance.. This is advantageous since exits or entries at highways have only a certain length. For determining the passed distance after the starting point, the starting point of the potential exit or entry and the motion information about the ego-vehicle, e.g., the vehicle speed, are used. The predefined distance can e.g., be defined by a threshold that covers the regular length of exits or entries.

In a preferred embodiment the speed limit assigned to the potential exit or entry candidate is considered to be valid for all detected lanes if predefined criteria are met. The possible highway exit or entry is considered to be a permanent part of the road if after the predefined distance the at least one additional lane is still present in the road model.

It is further preferred that for the speed limit sign to be valid for all detected lanes the following predefined criteria have to be met:
- A speed limit sign was only assigned to the possible highway exit or entry;
- All lanes of the possible exit or entry are still present in the road model; and
- No further speed limit sign which has been considered to be valid for the highway has been passed after the assigned speed limit sign.

The above-mentioned x-coordinates in relation to a vehicle coordinate system are the simple solution that should yield satisfying results in typical highway scenarios. If a higher precision is desired, a distance along the path (i.e., along the road (center) or the (ego) lane, for example) can be calculated and used instead. The curvier the road, the higher the precision benefit would be. The same method should be used for all coordinates that are to be compared to each other, though. The distance the vehicle passed after the new lane had been added, can e.g., be independently calculated as an integration of the vehicle velocity over time or directly be detected via an odometer sensor, as it is only compared against a predefined threshold, which e.g. covers the regular length of exits or entries.

According to the invention a computer program product for assigning speed limit signs to highway exits and entries is proposed which is designed to execute a method according to the invention or the respective embodiments.

The described method can be implemented as a part of a speed limit assist software that can be run on either a normal ECU or an HPC. The minimum required input sensor is a front view camera that is able to detect and provide speed limit signs as well as lane markings. If the camera itself does not explicitly derive and provide a geometric representation of the road ahead based on the detected markings, an internal component in the speed limit assist software needs to do this.

Further preferred embodiments of the invention are subject matter of the figures. Therein shows:
Fig. 1: a schematic flow chart of an embodiment of the invention; and
Fig. 2: a further flow chart of an embodiment of the invention.

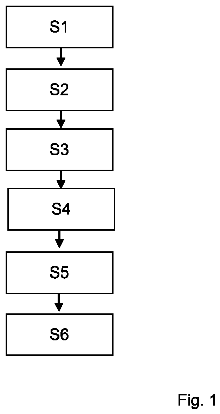

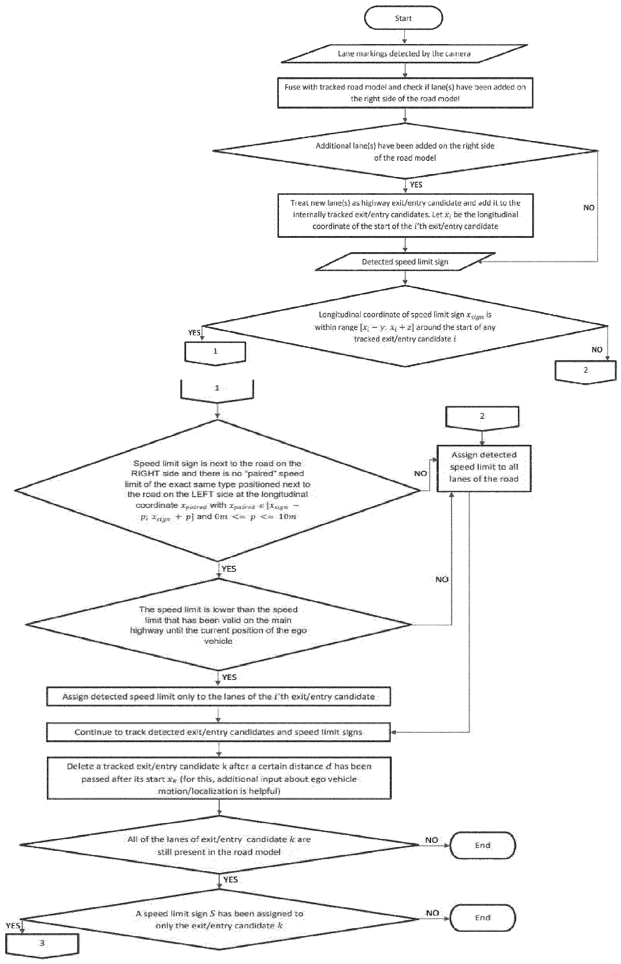

Figure 1 shows a schematic flow chart of an embodiment of the invention. The method for assigning speed limit signs to highway exits and entries using at least one camera sensor of an ego-vehicle comprises the following steps. In step S1 lanes of a road in front of the ego-vehicle are detected by means of sensor data of at least one camera sensor. In a step S2 a road model is generated and updated based on the detected lanes and the road model is tracked. In step S3 it is identified if the ego-vehicle is driving on a highway based on the road model. In Step S4 a possible highway exit or entry candidate is identified comprising detecting and tracking at least one additional lane which is added on one side of the road to the road model. In a further step S5 a speed limit sign next to the possible highway exit or entry is detected. In a step S6 the traffic sign is assigned only to the exit or entry, if predefined criteria are met.

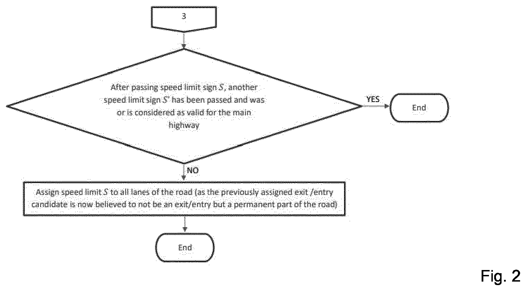

Figure 2 shows another flow chart according to a particularly preferred embodiment of the invention. After starting the vehicle lane markings are detected by the camera. These detected lane markings are then fused with a tracked road model and it is checked, if one or more lanes have been added on the right side of the road model. Depending on the country it also could be the left side of the road model. The expected side of the entries/exits is country specific and is expected to correlate with the current traffic orientation. If additional lanes have been added, in this example, on the right side of the road model, these new lane or lanes are treated as highway exit or entry candidate and are added to the internally tracked exit or entry candidates. Let xₗ be the longitudinal coordinate of the start of the i'th exit or entry candidate. Additionally, a speed limit sign could have been detected. If so, it is checked if the longitudinal coordinate of the speed limit sign x_{sign} is within a range [xᵢ -y; xᵢ - z] around the start of any tracked exit or entry candidate. If the longitudinal coordinate is not within the mentioned range, the speed limit sign is assigned to all lanes of the road. For example, if the coordinate is within the range, it is checked if the speed limit sign is next to the road on the right side and that there is no paired speed limit of the exact same type positioned next to the road on the left side at the longitudinal coordinate x_{paired} with x_{paired} ∈[x_{sign} - p; x_{sign} + p] and for this example p=10. As stated this is an example value that can be changed and adapted accordingly. If it is not in this range the speed limit is also assigned to all lanes of the road. If it is in this range it is checked if the speed limit is lower than the speed limit that has been valid on the main highway until the current position of the ego vehicle. If the speed limit is not lower then again the speed limit is assigned to all lanes of the road. If it is lower the detected speed limit is assigned only to the lanes of the i'th exit or entry candidate. After that and also if the speed limit has been assigned to all lanes of the road, the detected exit or entry candidates and speed limit signs are continuously tracked. A tracked exit or entry candidate k is deleted after a certain distance d has been passed after its start xₖ. After that it is checked if all the lanes of the exit or entry candidate k are still present in the road model. If not, then the processing for this specific speed limit sign detection ends. Afterwards the algorithm waits for the next speed limit sign or the next entry/exit candidate and starts again. If yes, it is checked if a speed limit sign S has been assigned only to the exit or entry candidate k. If not, then the method can also be ended. If yes, it is checked if after passing the speed limit sign S, another speed limit sign S' has been passed and was or is considered valid for the main highway. If yes the method ends. If not, the speed limit S is assigned to all lanes of the road as the previously assigned exit or entry candidate is now believed to not be an exit or entry but a permanent part of the road.

## Claims

1. Method for assigning speed limit signs to highway exits and entries using at least one camera sensor of an ego-vehicle with the following steps:
- Detecting (S1) lanes of a road in front of the ego-vehicle by means of the at least one camera sensor;
- Generating (S2) and updating a road model based on the detected lanes and tracking the road model;
- Identifying (S3) if the ego-vehicle is driving on a highway based on the road model;
- Identifying (S4) a possible highway exit or entry candidate comprising detecting and tracking at least one additional lane which is added on one side of the road to the road model;
- Detecting (S5) a speed limit sign next to the possible highway exit or entry;
- Assigning (S6) the traffic sign only to the exit or entry, if predefined criteria are met.

2. Method according to claim 1,
**characterized in that**,
detecting the lanes on the road is done by detecting lane markings with the at least one camera sensor.

3. Method according to claim 1,
**Characterized in that**,
the predefined criteria are as follows:
d) A longitudinal coordinate of the traffic sign is within a range around the starting point of the possible exit or entry;
e) The speed limit sign is next to the road and only on one side; and
f) The speed limit is lower than the speed limit which has been valid on the highway before passing the speed limit sign.

4. Method according to claim 1,
**characterized in that**,
a starting point of the possible highway exit or entry is defined as an x-coordinate in relation to a vehicle coordinate system.

5. Method according to claims 1 and 4,
**characterized in that**,
after the ego-vehicle has passed a predefined distance after the starting point, the at least one additional lane is considered to be a permanent part of the road if the at least one additional lane is still present after the predefined distance.

6. Method according to any of the preceding claims,
**characterized in that**,
the speed limit assigned to only the potential exit or entry candidate is considered to be valid for all detected lanes if predefined criteria are met.

7. Method according to claim 6,
**characterized in that**,
for the speed limit sign to be considered valid for all detected lanes the following predefined criteria have to be met:
- Thespeed limit sign was only assigned to the possible highway exit or entry;
- All lanes of the possible exit or entry are still present in the road model; and
- No further speed limit sign which has been considered to be valid for the highway has been passed after the assigned speed limit sign.

8. Computer program product for assigning speed limit signs to highway exits and entries which is designed to execute a method according to any of claims 1 to 7.
